# EUROPÄISCHE PATENTSCHRIFT

(11) **EP 2 368 763 B1**
(45) Veröffentlichungstag und Bekanntmachung des Hinweises auf die Patenterteilung: **27.03.2013**
(21) Anmeldenummer: 10015864.1
(22) Anmeldetag: 21.12.2010
(51) Int. Cl.: B60R 5/04, B65G 13/12

(54) **Ladebodeneinrichtung für den Laderaum eines Kraftwagens**
Loading floor device for the storage space of a motor vehicle
Dispositif de sol de chargement pour l'espace de chargement d'un véhicule automobile

(30) Priorität: 27.03.2010 DE 102010013176
(43) Veröffentlichungstag der Anmeldung: 28.09.2011
(73) Patentinhaber: Daimler AG, 70327 Stuttgart (DE)
(72) Erfinder: Koukal, Joachim, 71069 Sindelfingen (DE); Lowatscheff, Stefan, 71134 Aidlingen (DE)
(74) Vertreter: JENSEN & SON

(56) Entgegenhaltungen:
- DE-A1- 2 543 164
- DE-A1- 19 907 794
- DE-U1-202007 015 338
- US-A- 3 011 665
- US-A- 3 690 485

## Beschreibung

Die Erfindung betrifft einen Kraftwagen mit einer Ladebodeneinrichtung für den Laderaum des Kraftwagens der im Oberbegriff des Patentanspruchs 1 angegebenen Art.

Aus der DE 2 543 164 A1 ist bereits eine solche Ladebodeneinrichtung mit einer Rollelementanordnung und mit einem Ladebodenelement, auf welchem Gegenstände zum Transport angeordnet werden können, als bekannt zu entnehmen. Dabei ist das Ladebodenelement durch eine Mehrzahl von langgestreckten, leistenförmigen Querteilen ausgebildet, welche in einem Abstand voneinander auf einem Träger befestigt sind. Zwischen den Querteilen sind weitere, langgestreckte, leistenförmige Teile angeordnet, in welchen die Rollelementanordnung integriert ist. Die Rollelementanordnung weist dabei Kugelelemente auf, die aus diesen Teilen ragen. Um Gegenstände widerstandslos über das Ladebodenelement zu bewegen, werden die Teile angehoben, so dass die Kugelelemente gegenüber dem Ladebodenelement überstehen. Dabei sind diese Teile in einer für den Transport von Gegenständen vorgesehenen, abgesenkten Stellung tiefer als die Querteile angeordnet, so dass zwischen den Kanten der Querteile keine Stützfläche vorhanden ist. Als nachteilig bei einer derartigen Ladebodeneinrichtung ist jedoch der Umstand anzusehen, dass durch die Kanten der Querteile und die fehlende Stützfläche das Beladen von Gegenständen erschwert sein kann, wenn die Rollelementanordnung nicht angehoben ist.

Die DE 20 2007 015 338 U1 offenbart eine Kraftwagen mit einem Ladebodeneinrichtung gemäß dem Obergriff des Anspruchs 1, in welcher eine mit einer Mehrzahl von Kugeln bestückte Schiene angebracht ist. Die Schiene weist einen Klappmechanismus auf, mittels welchem die Schiene und somit auch die Kugeln gegenüber einem Ladebodenelement der Ladebodeneinrichtung zwischen einer Transportstellung und einer Beladestellung höhenverstellbar sind. In der hochgeklappten Beladestellung ragen die Kugeln durch entsprechende Öffnungen aus dem Ladebodenelement heraus, und in der heruntergeklappten Transportstellung sind die Kugeln gegenüber dem Ladebodenelement abgesenkt.

Der DE 199 07 794 A1 ist ebenfalls eine Ladebodeneinrichtung zu entnehmen. Die Ladebodeneinrichtung umfasst eine Mehrzahl von Rollelementen, auf welchen ein Ladebodenelement angeordnet ist. Die Rollelementen sind zwischen einer Beladestellung und Transportstellung in Fahrzeughochrichtung höhenverstellbar ausgebildet, wobei die Rollelementen in einer abgesenkten Transportstellung mit einem Rahmenelement der Ladebodeneinrichtung in Kontakt stehen, so dass eine Drehung der Rollelemente und somit auch eine Abrollbewegung des Ladebodenelements auf den Rollelementen verhindert wird. In der angehobenen Beladestellung hingegen sind die Rollelemente frei drehbar, wodurch das Ladebodenelement auf den Rollelementen abrollen kann.

Der US 3 690 485 ist eine Transportvorrichtung für Frachtgut als bekannt zu entnehmen. Die Transportvorrichtung umfasst ein Oberteil mit einer Mehrzahl von Aussparungen, durch welche jeweilige Rollelemente bereichsweise hindurchragen können, auf welchen jeweiliges Frachtgut transportiert werden kann. Die Rollelemente sind dabei höhenverstellbar gegenüber dem Oberteil ausgebildet, so dass die Rollelemente zum einen aus den Aussparungen herausragend und zum anderen unterhalb des Oberteils versenkt positioniert werden können.

Es ist Aufgabe der vorliegenden Erfindung, einen Kraftwagen mit einer Ladebodeneinrichtung für den Laderaum des Kraftwagens der eingangs genannten Art zu schaffen, mittels welcher das Beladen von Gegenständen erleichtert wird.

Diese Aufgabe wird erfindungsgemäß durch einen Kraftwagen mit den Merkmalen des Patentanspruchs 1 gelöst. Vorteilhafte Ausgestaltungen mit zweckmäßigen und nichttrivialen Weiterbildungen der Erfindung sind in den abhängigen Patentansprüchen angegeben.

Um einen Kraftwagen mit einer Ladebodeneinrichtung für den Laderaum eines Kraftwagens zu schaffen, mittels welcher das Beladen von Gegenständen erleichtert wird, mit einer Rollelementanordnung und mit einem Ladebodenelement, auf welchem zu transportierende Gegenstände anordnenbar sind, wobei die Rollelementanordnung und das Ladebodenelement relativ zueinander in Fahrzeughochrichtung zwischen einer Transportstellung, bei welcher Rollelemente der Rollelementanordnung gegenüber dem Ladebodenelement abgesenkt sind, und einer Beladestellung, bei welcher die Rollelemente der Rollelementanordnung gegenüber dem Ladebodenelement überstehen, verstellbar sind, ist schließlich erfindungsgemäß vorgesehen, dass die Rollelementanordnung und das Ladebodenelement in Abhängigkeit eines Öffnungszustandes einer korrespondierenden Laderaumtür, -klappe oder dgl. und/oder in Abhängigkeit eines Fahrbetriebszustandes des Kraftwagens gesteuert relativ zueinander verstellbar sind. Dadurch kann die Position der Rollelementanordnung und des Ladebodenelements zueinander beispielsweise bei geschlossener Laderaumtür oder -klappe und/oder beim Fahren in der Transportstellung gehalten und bei offener Laderaumtür oder -klappe und/oder bei stehendem Kraftwagen mit abgestelltem Motor in die Beladestellung gebracht werden.

Eine solche Ladebodeneinrichtung für den Laderaum eines Kraftwagens, mit einer Rollelementanordnung und mit einem Ladebodenelement, auf welchem zu transportierende Gegenstände anordnenbar sind, wobei die Rollelementanordnung und das Ladebodenelement relativ zueinander in Fahrzeughochrichtung zwischen einer Transportstellung, bei welcher Rollelemente der Rollelementanordnung gegenüber dem Ladebodenelement abgesenkt sind, und einer Beladestellung, bei welcher die Rollelemente der Rollelementanordnung gegenüber dem Ladebodenelement überstehen, verstellbar sind, ist vorzugsweise so ausgestaltet, dass das Ladebodenelement als Paneel mit einer Mehrzahl von zu den Rollelementen der Rollelementanordnung korrespondierenden Öffnungen ausgebildet ist.

Somit weist das Ladebodenelement eine Stützfläche zum Ablegen und Transportieren von Gegenständen auf, die sich im Bereich des Bodens des Laderaums großflächig zwischen den Laderaumwänden erstrecken kann und weitgehend als eine einzige Ebene ausgebildet ist. Da in dem Ladebodenelement lediglich Öffnungen für die Rollelemente der Rollelementanordnung vorgesehen sind, insbesondere wenn der obere Bereich der Rollelemente in der Transportstellung der Ladebodeneinrichtung, wie in dem zitierten Stand der Technik, nur knapp unterhalb der Oberfläche des Ladebodenelements angeordnet ist, werden vertiefte Stellen über der Stützfläche zum Ablegen und Transportieren von Gegenständen weitestgehend vermieden. Dadurch wird das Abstellen von Gegenständen auf dem Ladebodenelement auch in der Transportstellung der Ladebodeneinrichtung erleichtert.

In weiterer Ausgestallung der Erfindung hat es sich darüber hinaus als vorteilhaft gezeigt, wenn jedes Rollelement an einem Stützbodenelement, welches unterhalb des Ladebodenelements angeordnet ist, drehbar gelagert ist, wobei sich seine korrespondierende Drehachse parallel zu einer Ladekante des Laderaums erstreckt. Damit ist es vorgesehen, dass sich die Rollelemente jeweils nur um eine Achse parallel zu der Ladekante des Laderaums drehen können, so dass Gegenstände nur senkrecht zu der Ladekante verschoben werden können. Wenn der Kraftwagen auf einem Gefälle geparkt ist, kann dadurch vermieden werden, dass Gegenstände in der Beladestellung der Ladebodeneinrichtung unkontrolliert in eine andere, unvorhergesehene Richtung rutschen und beispielsweise gegen die Laderaumwände oder andere Gegenstände prallen können.

Gemäß einer vorteilhaften Ausführungsform der Erfindung ist es vorgesehen, dass das Ladebodenelement zwischen der Transportstellung und der Beladestellung relativ zu der Rollelementanordnung höhenverstellbar ist. So ist das Ladebodenelement in der Beladestellung der Ladebodeneinrichtung relativ zu der Rollelementanordnung in Fahrzeughochrichtung abgesenkt, so dass Gegenstände auf den Rollelementen liegen und reibungslos verschoben werden können. In der Transportstellung ist das Ladebodenelement angehoben, wodurch Gegenstände auf dem Ladebodenelement kraftschlüssig liegen und somit gegen Verrutschen gesichert sind.

In einer weiteren bevorzugten Ausführungsform ist es vorgesehen, dass die Rollelementanordnung, insbesondere durch Höhenverstellung des Stützbodenelements, zwischen der Transportstellung und der Beladestellung relativ zu dem Ladebodenelement höhenverstellbar ist.

Des Weiteren hat es sich als vorteilhaft gezeigt, wenn die Rollelementanordnung und das Ladebodenelement relativ zueinander zwischen der Transportstellung und der Beladestellung mechanisch oder piezoelektrisch, insbesondere mittels Piezostacks, verstellbar sind, so dass schwere Gegenstände geladen und im Bereich des Ladebodenelements verschoben werden können. Piezostacks - mehrere dünne Piezoelemente, die mit dazwischenliegenden Elektroden zusammengefügt werden - haben den Vorteil, dass sie bei langer Lebensdauer hochbelastbar sind und einen niedrigen elektrischen Leistungsbedarf aufweisen.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: eine ausschnittsweise Perspektivansicht eines Laderaums eines Kraftwagens, im Bereich dessen Bodens eine Ladebodeneinrichtung mit einer Rollelementanordnung vorgesehen ist, wobei die Ladebodeneinrichtung in einer Beladestellung zum Beladen von schweren Gegenständen verstellt ist;
- Fig. 2: eine ausschnittsweise Perspektivansicht des Laderaums von Fig. 1, bei welcher im Bereich der Ladebodeneinrichtung ein Schnitt senkrecht zu einer Ladekante des Laderaums gezeigt ist; und
- Fig. 3: eine ausschnittsweise Perspektivansicht des Laderaums von Fig. 1, bei welcher im Bereich der Ladebodeneinrichtung ein Schnitt parallel zu der Ladekante des Laderaums gezeigt ist, wobei die Ladebodeneinrichtung in einer Transportstellung verstellt ist.

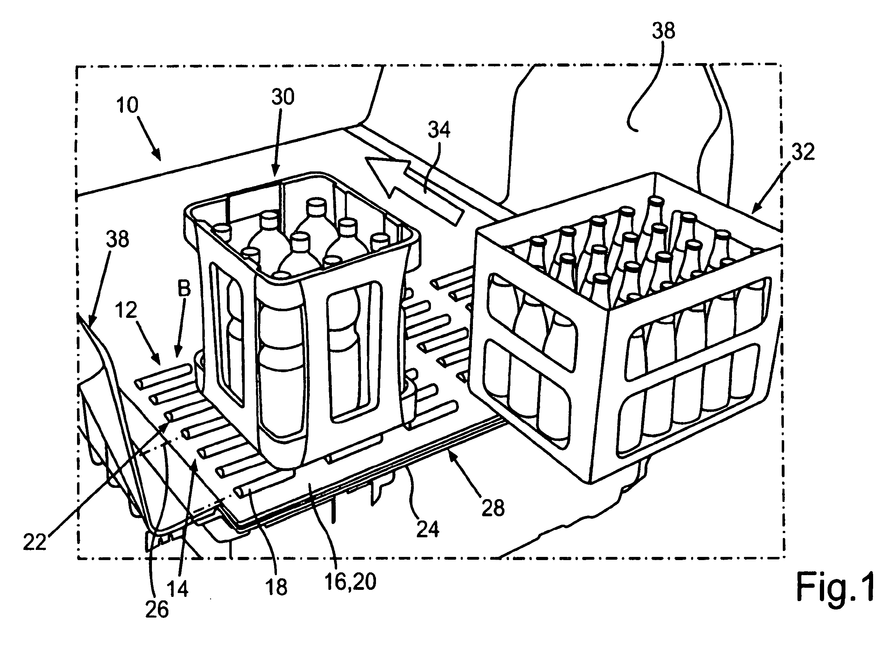

Fig. 1 bis 3 zeigen jeweils eine ausschnittsweise Perspektivansicht eines Laderaums 10 eines nicht weiter dargestellten Kraftwagens, im Bereich dessen Bodens eine Ladebodeneinrichtung 12 mit einer Rollelementanordnung 14 und mit einem Ladebodenelement 16 vorgesehen ist.

Die Rollelementanordnung 14 weist sechs Reihen mit je sechs Rollelementen 18 in Form von Rollen auf, die hier beispielhaft in Spalten ausgerichtet sind. Die Reihen von Rollelementen 18 könnten ebenso stattdessen zueinander versetzt sein. Das Ladebodenelement 16 ist dabei als Paneel 20 ausgebildet und weist eine Mehrzahl von zu den Rollelementen 18 der Rollelementanordnung 14 korrespondierenden Öffnungen 22 auf.

Die Rollelemente 18 sind an einem Stützbodenelement 24, welches unterhalb des Ladebodenelements 16 angeordnet ist, beispielsweise über nicht dargestellte Kugellager drehbar gelagert, wobei sich ihre korrespondierenden Drehachsen 26 parallel zu einer Ladekante 28 des Laderaums 10 erstrecken.

Die Rollelementanordnung 14 und das Ladebodenelement 16 sind relativ zueinander in Fahrzeughochrichtung zwischen einer Beladestellung B und einer Transportstellung T verstellbar. Hierzu ist das Ladebodenelement 16 zwischen der Transportstellung T und der Beladestellung B piezoelektrisch, beispielsweise mittels Piezostacks, relativ zu der Rollelementanordnung 14 bzw. dem Stützbodenelement 24 höhenverstellbar. Das Ladebodenelement 16 könnte auch mechanisch höhenverstellbar sein.

In Fig. 1 ist auf der Ladebodeneinrichtung 12 bereits ein Gegenstand 30 von zwei schweren Gegenständen 30, 32 - zwei Getränkekisten - angeordnet. Das Ladebodenelement 16 ist dabei in der Beladestellung B abgesenkt, so dass dieser Gegenstand 30 auf den Rollelementen 18 der Rollelementanordnung 14, die durch die Öffnungen 22 des Ladebodenelements 16 gegenüber dem Ladebodenelement 16 überstehen, abgestützt ist. Der zweite Gegenstand 32 kann in Richtung des Pfeils 34 über die drehbaren Rollelemente 18 eingeschoben werden, bis dieser die gewünschte Position im Laderaum 10 erreicht hat. So wird mithilfe der Rollelementanordnung 14 das Einschieben des Gegenstands 32 von der Ladekante 28 bis in einen hinteren Bereich des Laderaums 10 erleichtert.

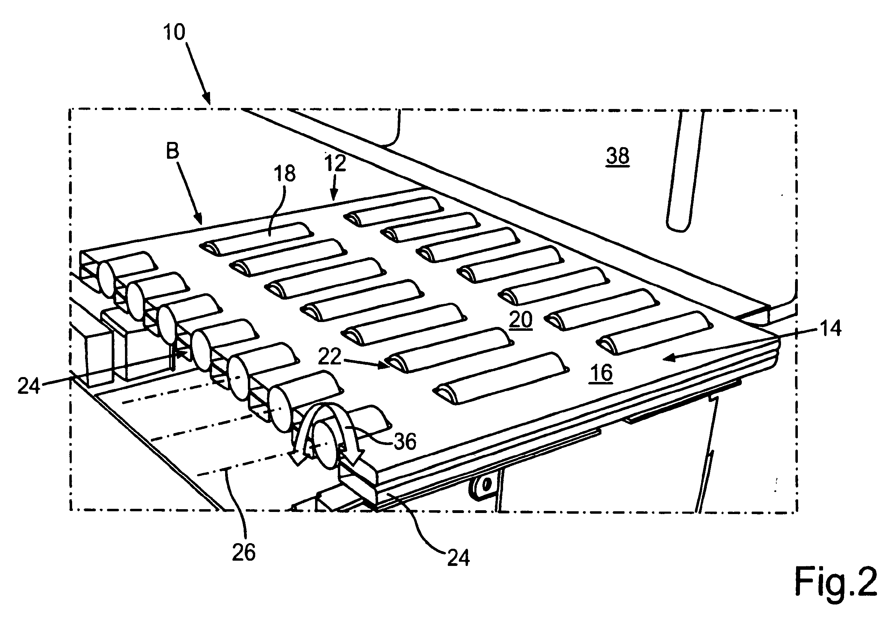

Da sich die Rollelemente 18 jeweils nur um eine Drehachse 26 parallel zu der Ladekante 28 des Laderaums drehen können, wie in Fig. 2 der Doppelpfeil 36 zeigt, können Gegenstände 30, 32 nur senkrecht zu der Ladekante verschoben werden. Wenn der Kraftwagen auf einem seitlichen Gefälle geparkt wäre, würden sich die Gegenstände 30, 32 nicht durch ihr Gewicht unkontrolliert in Fahrzeugquerrichtung seitlich verschieben und damit nicht gegen die Laderaumwände 38 stoßen.

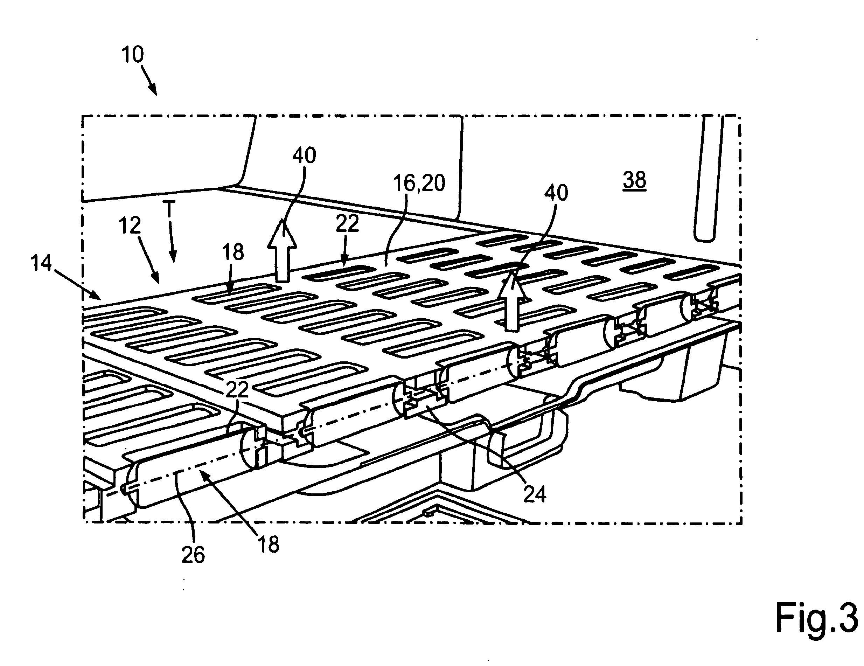

Nachdem die Gegenstände 30, 32 die gewünschte Position im Laderaum 10 erreicht haben, kann die Ladebodeneinrichtung 12 bzw. in diesem Fall das Ladebodenelement 16, wie in Fig. 3 die Pfeile 40 zeigen, in die Transportstellung T angehoben werden. Dadurch senken sich die Rollelemente 18 relativ zu den Öffnungen 22 des Ladebodenelements 16 ab, und die Gegenstände 30, 32 - in Fig. 3 nicht dargestellt - kommen in Kontakt mit dem Ladebodenelement 16, wodurch sie durch Reibung kraftschlüssig gegen Verrutschen gesichert werden.

Die Verstellung der Ladebodeneinrichtung 12 zwischen der Transportstellung T und der Beladestellung B - bzw. die relative Stellung der Rollelementanordnung 14 und des Ladebodenelements 16 zueinander - könnte ebenso durch Höhenverstellung der Rollelementanordnung 14 erfolgen. Dies könnte in diesem Fall beispielsweise durch Höhenverstellung des Stützbodenelements 24 stattfinden, indem das Stützbodenelement 24 in der Transportstellung T relativ zu einem festmontierten Ladebodenelement 16 abgesenkt und in der Beladestellung B angehoben ist.

Die Stellung der Ladebodeneinrichtung 12 bzw. die relative Stellung der Rollelementanordnung 14 und des Ladebodenelements 16 zueinander kann in Abhängigkeit eines Öffnungszustandes einer korrespondierenden Laderaumtür oder Laderaumklappe des Kraftwagens gesteuert werden. Dabei kann zudem der Fahrbetriebszustand des Kraftwagens berücksichtigt werden. So kann beispielsweise die Ladebodeneinrichtung 12 bei geschlossener Laderaumtür oder -klappe und beim Fahren in der Transportstellung T und bei offener Laderaumtür oder -klappe und angehaltenem Kraftwagen mit abgestelltem Motor in die Beladestellung B verstellt sein.

## Patentansprüche

1. Kraftwagen mit einer Ladebodeneinrichtung für den Laderaum eines Kraftwagens, mit einer Rollelementanordnung (14) und mit einem Ladebodenelement (16), auf welchem zu transportierende Gegenstände anordnenbar sind, wobei die Rollelementanordnung (14) und das Ladebodenelement (16) relativ zueinander in Fahrzeughochrichtung zwischen einer Transportstellung (T), bei welcher Rollelemente (18) der Rollelementanordnung (14) gegenüber dem Ladebodenelement (16) abgesenkt sind, und einer Beladestellung (B), bei welcher die Rollelemente (18) der Rollelementanordnung (14) gegenüber dem Ladebodenelement (16) überstehen, verstellbar sind,
**dadurch gekennzeichnet, dass**
die Rollelementanordnung (14) und das Ladebodenelement (16) in Abhängigkeit eines Öffnungszustandes einer korrespondierenden Laderaumtür, -klappe oder dgl. und/oder in Abhängigkeit eines Fahrbetriebszustandes des Kraftwagens gesteuert relativ zueinander verstellbar sind.

2. Kraftwagen nach Anspruch 1,
**dadurch gekennzeichnet, dass**
das Ladebodenelement (16) als Paneel (20) mit einer Mehrzahl von zu den Rollelementen (18) der Rollelementanordnung (14) korrespondierenden Öffnungen (22) ausgebildet ist.

3. Kraftwagen nach Anspruch 1 oder 2,
**dadurch gekennzeichnet, dass**
jedes Rollelement (18) an einem Stützbodenelement (24), welches unterhalb des Ladebodenelements (16) angeordnet ist, drehbar gelagert ist, wobei sich seine korrespondierende Drehachse (26) parallel zu einer Ladekante (28) des Laderaums (10) erstreckt.

4. Kraftwagen nach einem der vorhergehenden Ansprüche,
**dadurch gekennzeichnet, dass**
das Ladebodenelement (16) zwischen der Transportstellung (T) und der Beladestellung (B) relativ zu der Rollelementanordnung (14) höhenverstellbar ist.

5. Kraftwagen nach einem der Ansprüche 1 bis 3,
**dadurch gekennzeichnet, dass**
die Rollelementanordnung (14), insbesondere durch Höhenverstellung des Stützbodenelements (24), zwischen der Transportstellung (T) und der Beladestellung (B) relativ zu dem Ladebodenelement (16) höhenverstellbar ist.

6. Kraftwagen nach einem der vorhergehenden Ansprüche,
**dadurch gekennzeichnet, dass**
die Rollelementanordnung (14) und das Ladebodenelement (16) relativ zueinander zwischen der Transportstellung (T) und der Beladestellung (B) mechanisch oder piezoelektrisch, insbesondere mittels Piezostacks, verstellbar sind.

## Claims

1. Motor vehicle fitted with a loading floor device for the cargo area of a motor vehicle, the device comprising a rolling element arrangement (14) and a loading floor element (16) on which objects to be transported can be arranged, wherein the rolling element arrangement (14) and the loading floor element (16) are adjustable relative to one another in the vertical direction of the vehicle between a transport position (T) in which the rolling elements (18) of the rolling element arrangement (14) are lowered relative to the loading floor element (16) and a loading position (B) in which the rolling elements (18) of the rolling element arrangement (14) stand out relative to the loading floor element (16),
**characterised in that**
the rolling element arrangement (14) and the loading floor element (16) are adjustable relative to one another in a controlled manner as a function of an opening state of a corresponding cargo area door, flap or the like and/or as a function of a driving mode of the motor vehicle.

2. Motor vehicle according to claim 1,
**characterised in that**
the loading floor element (16) is designed as a panel (20) with a plurality of openings (22) corresponding to the rolling elements (18) of the rolling element arrangement (14).

3. Motor vehicle according to claim 1 or 2,
**characterised in that**
each rolling element (18) is rotatably mounted on a supporting base element (24) located below the loading floor element (16), its corresponding axis of rotation (26) extending parallel to a load sill (28) of the cargo area (10).

4. Motor vehicle according to any of the preceding claims,
**characterised in that**
the loading floor element (16) is vertically adjustable relative to the rolling element arrangement (14) between the transport position (T) and the loading position (B).

5. Motor vehicle according to any of claims 1 to 3,
**characterised in that**
the rolling element arrangement (14) is vertically adjustable relative to the loading floor element (16) between the transport position (T) and the loading position (B), in particular by means of the vertical adjustment of the supporting base element (24).

6. Motor vehicle according to any of the preceding claims,
**characterised in that**
the rolling element arrangement (14) and the loading floor element (16) are adjustable relative to one another between the transport position (T) and the loading position (B) by mechanical or piezoelectric means, in particular by means of piezo stacks.

## Revendications

1. Véhicule automobile doté d'un dispositif comportant un plancher de chargement pour l'espace de chargement d'un véhicule automobile, un ensemble d'éléments à rouleaux (14) et un élément de plancher de chargement (16), sur lequel des objets à transporter peuvent être déposés, l'ensemble d'éléments à rouleaux (14) et l'élément de plancher de chargement (16) pouvant être déplacés l'un par rapport à l'autre dans la direction verticale du véhicule entre une position de transport (T), dans laquelle des éléments à rouleaux (18) de l'ensemble d'éléments à rouleaux (14) sont abaissés par rapport à l'élément de plancher de chargement (16), et une position de chargement (B), dans laquelle les éléments à rouleaux (18) de l'ensemble d'éléments à rouleaux (14) dépassent de l'élément du plancher de chargement (16), **caractérisé en ce que** l'ensemble des éléments à rouleaux (14) et l'élément de plancher de chargement (16) peuvent être commandés et réglés en fonction d'un état d'ouverture d'une porte /trappe correspondante ou similaire de l'espace de chargement, et/ou en fonction d'un état de fonctionnement du véhicule automobile.

2. Véhicule automobile selon la revendication 1, **caractérisé en ce que** l'élément de plancher de chargement (16) est conçu comme un panneau (20) doté d'une pluralité d'ouvertures (22) correspondantes aux éléments de rouleaux (18) de l'ensemble d'éléments à rouleaux (14).

3. Véhicule automobile selon la revendication 1 ou la revendication 2, **caractérisé en ce que** chaque élément de rouleau (16) est monté rotatif sur un élément de plancher d'appui (24) lequel est disposé sous l'élément de plancher de chargement (16), son axe de rotation (26) correspondant s'étend parallèlement à un rebord de chargement (28) de l'espace de chargement (10).

4. Véhicule automobile selon l'une quelconque des revendications précédentes, **caractérisé en ce que** l'élément de plancher de chargement (16) peut être réglée en hauteur entre la position de transport (T) et la position de chargement (B) par rapport à l'ensemble d'éléments à rouleaux (14).

5. Véhicule automobile selon l'une quelconque des revendications 1 à 3, **caractérisé en ce que** l'ensemble d'éléments à rouleaux (14), peut être réglé en hauteur entre la position de transport (T) et la position de chargement (B) par rapport à l'élément de plancher de chargement (16), notamment par le réglage en hauteur de l'élément de plancher d'appui (24).

6. Véhicule automobile selon l'une quelconque des revendications précédentes, **caractérisé en ce que** l'ensemble d'éléments à rouleaux (14) et l'élément de plancher de chargement (16) peuvent être réglés l'un par rapport à l'autre de manière mécanique ou piézoélectrique, notamment au moyen d'un empilement piézoélectrique, entre la position de transport (T) et la position de chargement (B).
